(19) Europäisches Patentamt
European Patent Office
Office européen des brevets

(11) EP 3 530 441 A1

(12) DEMANDE DE BREVET EUROPEEN

(43) Date de publication:
28.08.2019 Bulletin 2019/35

(51) Int Cl.:
B29C 70/64 (2006.01)     B60R 13/08 (2006.01)

(21) Numéro de dépôt: 19158593.4

(22) Date de dépôt: 21.02.2019

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR
Etats d'extension désignés:
BA ME
Etats de validation désignés:
KH MA MD TN

(30) Priorité: 22.02.2018 FR 1851552

(71) Demandeur: Faurecia Automotive Industrie
92000 Nanterre (FR)

(72) Inventeurs:
• BATHELIER, Xavier
08240 Saint Pierremont (FR)
• DEBRUYNE, Anne-Sophie
08000 Charleville-Mézières (FR)
• HOANG, Minh-Tan
08200 Sedan (FR)

(74) Mandataire: Lavoix
2, place d'Estienne d'Orves
75441 Paris Cedex 09 (FR)

(54) **PIÈCE D'INSONORISATION DE VÉHICULE AUTOMOBILE ET PROCÉDÉ DE FABRICATION ASSOCIÉ**

(57) La pièce (10) comporte un corps (14) comprenant une pluralité de fibres (15) entrelacées et/ou liées.

Le corps (14) comporte dans son épaisseur :
- une région supérieure poreuse (16) comportant des éléments granulaires (18) dispersés entre les fibres (15) ;
- une région inférieure poreuse (20) dépourvue d'éléments granulaires (18) dispersés, ou comportant une concentration d'éléments granulaires (18) dispersés inférieure à la concentration en éléments granulaires (18) dispersés de la région supérieure poreuse (16).

La région supérieure poreuse (16) présente une résistance au passage de l'air supérieure d'au moins 100 N.m$^{-3}$.s à la résistance au passage de l'air de la région inférieure poreuse (20).

FIG.1

EP 3 530 441 A1

**Description**

La présente invention concerne une pièce d'insonorisation de véhicule automobile, comportant un corps comprenant une pluralité de fibres entrelacées et/ou liées.

Une telle pièce est destinée à résoudre les problèmes acoustiques qui se posent dans un espace sensiblement clos, tel que l'habitacle d'un véhicule automobile (tapis, pavillon, panneau de porte, etc.), au voisinage de sources de bruit telles qu'un moteur (tablier, etc.), ou le contact de pneumatiques avec une route (passage de roue, etc.).

En général, dans le domaine des basses fréquences, les ondes acoustiques engendrées par les sources de bruit précitées subissent un « amortissement » par des matériaux sous forme de feuilles simples ou doubles (sandwich précontraint) ayant un comportement viscoélastique ou par atténuation acoustique d'un système masse-ressort poreux et élastique.

Au sens de la présente invention, une pièce d'insonorisation assure une « isolation » lorsqu'elle empêche l'entrée d'ondes acoustiques à moyennes et hautes fréquences dans l'espace insonorisé, essentiellement par réflexion des ondes vers les sources de bruit ou l'extérieur de l'espace insonorisé.

Une pièce d'insonorisation fonctionne par « absorption acoustique » (dans le domaine des moyennes et hautes fréquences) lorsque l'énergie des ondes acoustiques se dissipe dans un matériau absorbant.

Une pièce d'insonorisation performante doit fonctionner à la fois en assurant une bonne isolation et par absorption. Pour caractériser la performance d'un tel ensemble, on utilise la notion d'indice de réduction sonore NR qui prend en compte les deux notions d'isolation et d'absorption : cet indice peut être calculé par l'équation suivante :

$$NR(dB)=TL - 10\log(S/A),$$

où TL est l'indice d'affaiblissement acoustique (ci-après indice d'affaiblissement) traduisant l'isolation. Plus cet indice est élevé, meilleure est l'isolation.

A est la surface d'absorption équivalente. Plus A est élevé, meilleure est l'absorption. S est la surface de la pièce.

Il est connu d'utiliser des ensembles d'insonorisation de type masse-ressort formés d'une couche poreuse et élastique de base, sur laquelle est disposée une couche imperméable de masse lourde. Cette couche imperméable de masse lourde présente généralement une masse surfacique élevée, notamment supérieure à 1 kg/m$^2$, et une masse volumique également élevée de l'ordre de 1500 kg/m$^3$ à 2000 kg/m$^3$.

De tels ensembles acoustiques fournissent une bonne isolation acoustique, mais sont relativement lourds. Par ailleurs, leur comportement est très peu performant en absorption.

Pour abaisser la masse d'un ensemble d'insonorisation, et obtenir un comportement amélioré en absorption, US2006/0113146 décrit un ensemble acoustique de type « biperméable ».

Un tel ensemble est dépourvu de masse lourde. La masse lourde est remplacée par une couche poreuse supérieure de résistance au passage de l'air beaucoup plus élevée que la couche inférieure sur laquelle elle s'appuie. Cette couche est orientée vers l'arrivée du son dans le véhicule automobile.

Pour fabriquer un tel ensemble, il est connu d'utiliser une même nappe textile de base. La nappe textile est découpée en deux parties, qui subissent des compressions différentes.

La partie la plus comprimée constitue la couche poreuse de résistivité supérieure. Elle est assemblée par collage sur la partie la moins comprimée.

Le procédé de fabrication d'une telle pièce est donc relativement complexe, puisqu'il nécessite plusieurs étapes, ce qui augmente le coût de fabrication de la pièce.

Un but de l'invention est d'obtenir une pièce d'insonorisation très efficace en absorption, et qui soit néanmoins simple et peu onéreuse à produire.

À cet effet, l'invention a pour objet une pièce du type précité, caractérisée en ce que le corps comporte dans son épaisseur :

- une région supérieure poreuse comportant des éléments granulaires dispersés entre les fibres;
- une région inférieure poreuse dépourvue d'éléments granulaires dispersés, ou comportant une concentration d'éléments granulaires dispersés inférieure à la concentration en éléments granulaires dispersés de la région supérieure poreuse;
- la région supérieure poreuse présentant une résistance au passage de l'air supérieure d'au moins 100 N.m$^{-3}$.s à la résistance au passage de l'air de la région inférieure poreuse.

La pièce selon l'invention peut comprendre l'une ou plusieurs des caractéristiques suivantes, prise(s) isolément ou suivant toute combinaison techniquement possible :

- la résistance au passage de l'air de la région supérieure poreuse est supérieure à 250 N.m$^{-3}$.s et est notamment comprise entre 250 N.m$^{-3}$.s et 1500 N.m$^{-3}$.s ;
- elle comporte des éléments liants, les éléments granulaires étant liés aux fibres par l'intermédiaire des éléments liants ;
- la dimension moyenne des éléments granulaires est inférieure à 1 mm et est notamment comprise entre 5 $\mu$m et 500 $\mu$m ;

- la densité du matériau constituant les éléments granulaires est inférieure à 3, et est notamment comprise entre 0,8 et 2 ;
- l'épaisseur de la région supérieure poreuse est inférieure à 50% de l'épaisseur du corps ;
- le corps est un feutre ou un textile ;
- le corps est d'un seul tenant ;
- les éléments granulaires sont formés de charges de baryte, de craie ou d'argiles.

L'invention a également pour objet un procédé de fabrication d'une pièce d'insonorisation de véhicule automobile comportant les étapes suivantes :

- fourniture d'un corps comportant une pluralité de fibres entrelacées et/ou liées, caractérisé par les étapes suivantes :
- incorporation d'éléments granulaires entre les fibres d'une région supérieure poreuse du corps;
- maintien d'une région inférieure poreuse dépourvue d'éléments granulaires dispersés, ou d'une région inférieure poreuse présentant une concentration d'éléments granulaires dispersés inférieure à la concentration en éléments granulaires dispersés de la région supérieure poreuse;

la région supérieure poreuse présentant une résistance au passage de l'air supérieure d'au moins 100 $N.m^{-3}.s$ à la résistance au passage de l'air de la région inférieure poreuse.

Le procédé selon l'invention peut comprendre l'une ou plusieurs des caractéristiques suivantes, prise(s) isolément ou suivant toute combinaison techniquement possible :

- la résistance au passage de l'air de la région supérieure poreuse est supérieure à 250 $N.m^{-3}.s$. et est notamment comprise entre 250 $N.m^{-3}.s$. et 1000 $N.m^{-3}.s$ ;
- il comporte une étape d'incorporation, entre les fibres de la région supérieure poreuse du corps, d'éléments liants, et l'activation des éléments liants, avantageusement par chauffage pour lier les éléments granulaires aux fibres ;
- le contrôle de l'épaisseur de pénétration des éléments granulaires lors de l'étape d'incorporation pour que l'épaisseur de la région supérieure poreuse soit inférieure à 50% de l'épaisseur du corps fibreux ;
- l'étape d'incorporation des éléments granulaires comporte l'incorporation des éléments granulaires dans le corps par application d'un champ électrique et/ou par application d'un mouvement vibratoire au corps.

L'invention sera mieux comprise à la lecture de la description qui va suivre, donnée uniquement à titre d'exemple, et faite en se référant aux dessins annexés, sur lesquels :

- la figure 1 est une vue schématique en coupe d'une première pièce d'insonorisation selon l'invention ;
- la figure 2 est une vue schématique illustrant une partie du procédé de fabrication de la pièce de la figure 1 ;
- la figure 3 est une vue schématique en coupe d'une étape additionnelle facultative du procédé de fabrication de la pièce de la figure 1.

Dans tout ce qui suit, les orientations sont généralement les orientations habituelles d'un véhicule automobile. Toutefois, les termes « au dessus », « sur », « en dessous », « sous », « supérieur » et « inférieur » s'entendent de manière relative, par rapport à la surface de référence du véhicule automobile, en regard de laquelle est disposé l'ensemble d'insonorisation. Le terme « inférieur » s'entend ainsi comme étant situé le plus près de la surface et le terme « supérieur » comme étant situé le plus éloigné de cette surface.

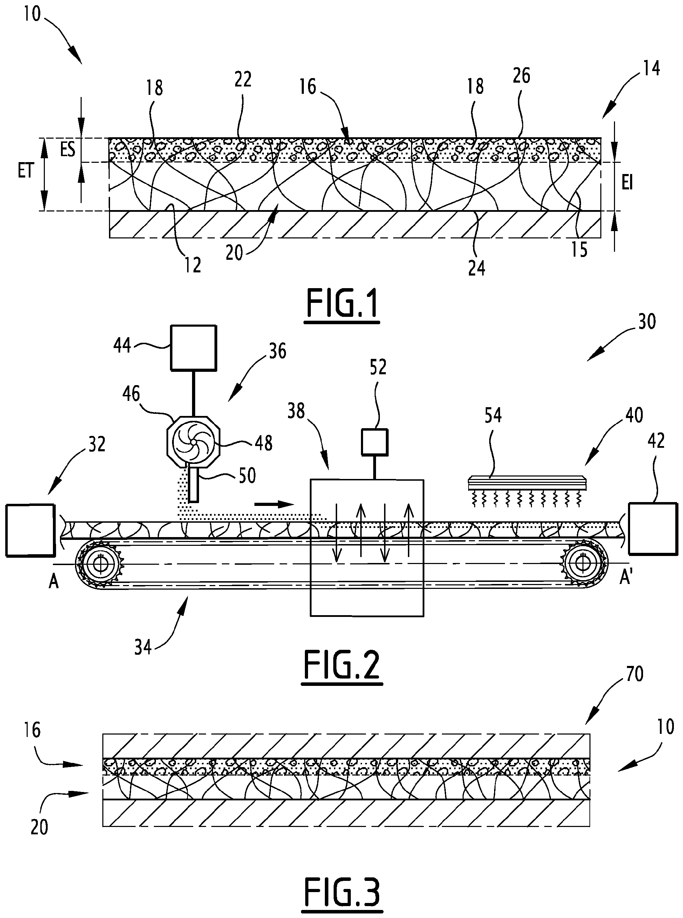

Une première pièce d'insonorisation 10 selon l'invention est représentée sur la figure 1. Cette pièce 10 est destinée à être disposée en regard d'une surface 12 d'un véhicule automobile.

La surface 12 est par exemple une surface métallique en tôle du véhicule définissant notamment un plancher, un plafond, une porte, un tablier séparant l'habitacle du compartiment moteur, un capot, ou un passage de roue de véhicule automobile.

La pièce 10 est destinée à être appliquée directement sur la surface 12. Elle peut être fixée sur la surface 12, avantageusement au moyen de pions (par exemple dans le cas d'un tablier) ou posée sur celle-ci (par exemple dans le cas d'un tapis). Dans une variante, la pièce 10 est collée sur la surface 12.

La pièce 10 comporte un corps 14 d'un seul tenant, formé d'une pluralité de fibres 15 entrelacées et/ou liées, le corps 14 comportant une région supérieure 16 poreuse comportant des éléments granulaires 18 dispersés entre les fibres 15 et une région inférieure 20 poreuse dépourvue d'éléments granulaires dispersés 18 ou comportant une concentration d'éléments granulaires dispersés 18 inférieure à la concentration d'éléments granulaires dispersés 18 dans la région supérieure poreuse 16.

Avantageusement, la région supérieure 16 de la pièce 10 comporte en outre des éléments liants 22 pour lier des éléments granulaires 18 aux fibres 15.

Dans cet exemple, le corps 14 est formé par un feutre ou par un textile d'un seul tenant.

Par « d'un seul tenant », on entend que le corps 14 est formé d'une couche unique de fibres entrelacées et/ou liées, et non d'un assemblage de couches liées entre elles.

Par « feutre », on entend au sens de la présente invention, un mélange de fibres de base et de liant. Les fibres de base peuvent être des fibres nobles et/ou recyclées, naturelles ou synthétiques, d'une seule ou de plusieurs natures. Des exemples de fibres naturelles pouvant être utilisées sont le lin, le coton, le chanvre, le bambou etc. Des exemples de fibres synthétiques pouvant être utilisées sont les fibres minérales telles que des fibres de verre, ou des fibres organiques telles que le kevlar, le polyamide, l'acrylique, le polyester, le polypropylène.

Le liant est de préférence une résine thermodurcissable. Des exemples de résines thermodurcissables sont les résines époxy, ou les résines phénoliques ou encore des résines polyester.

Dans une variante, le feutre comprend un pourcentage élevé de microfibres, par exemple plus de 50% et avantageusement 80% de microfibres.

Par « microfibres », on entend des fibres de tailles inférieures à 0,9 dtex, avantageusement 0,7 dtex.

Dans une variante, le feutre contient de la matière recyclée, provenant par exemple de déchets d'origine interne ou externe, notamment de chutes de pièces d'équipements automobiles, de rébus de fabrication, ou de pièces en fin de vie d'un véhicule. Ces déchets sont par exemple broyés et incorporés dans le feutre sous forme de morceaux de matière divisée constituées par des agglomérats, des flocons ou des particules. Les composants des déchets peuvent être séparés avant ou pendant le broyage.

Par « textile », on entend une nappe de fibres essentiellement à base de polymère thermoplastique tel le polypropylène, les polyesters ou encore les polyamides assemblées mécaniquement par aiguilletage sans l'utilisation de liants de nature chimique. Une telle nappe peut contenir un pourcentage de fibres recyclées thermoplastiques ou d'origine naturelle.

En référence à la figure 1, le corps 14 présente une surface inférieure 24 destinée à être orientée vers la surface 12, de préférence destinée à être appliquée sur la surface 12, et une surface supérieure 26 destinée à s'orienter à l'opposé de la surface 12.

Le corps 14 présente une épaisseur totale ET, prise perpendiculairement à la surface 12 entre la surface inférieure 24 et la surface supérieure 26, supérieure à 1 mm et comprise notamment entre 5 mm et 40 mm.

Les éléments granulaires 18 sont par exemple des charges sous forme de poudre. Les charges sont par exemple de la baryte, de la craie ou des argiles.

Les éléments granulaires 18 présentent une dimension moyenne calculée comme une moyenne en nombre inférieure à 1 mm et comprise notamment entre 5 $\mu$m et 500 $\mu$m.

Cette dimension moyenne est mesurée par exemple suivant la norme ISO13320-1.

La densité du matériau constituant les éléments granulaires 18 est inférieure à 5 et est notamment comprise entre 0,8 et 2.

Les éléments liants 22 sont par exemple formés par une poudre de matériau fusible à une température inférieure à 160° C, par exemple une poudre de polymère tel qu'une poudre de polyoléfine ou de polyéthylène.

Dans la pièce 10, la poudre en matériau fusible a été fondue au moins partiellement pour lier les fibres 15 aux éléments granulaires 18, sans faire fondre les éléments granulaires 18.

Ainsi, les éléments granulaires 18 sont maintenus en position par rapport aux fibres 15 par les éléments liants 22.

Comme indiqué plus haut, la concentration d'éléments granulaires 18 dans la région supérieure poreuse 16 est supérieure d'au moins 10% à la concentration d'éléments granulaires 18 dans la région inférieure 20.

La présence des éléments granulaires 18 dans la région supérieure poreuse 16 bouche les interstices présents entre les fibres 15, ce qui augmente la tortuosité et diminue la porosité de la région supérieure poreuse 16, tout en conservant une porosité non nulle.

Ainsi, la résistance au passage de l'air de la région supérieure poreuse 16 est supérieure d'au moins 100 N.m$^{-3}$.s à la résistance au passage de l'air de la région inférieure poreuse 20, notamment d'au moins 250 N.m$^{-3}$.s à la résistance au passage de l'air de la région inférieure poreuse 20.

En valeur absolue, la résistance au passage de l'air de la région supérieure poreuse 16 est supérieure à 250 N.m$^{-3}$.s, et est notamment comprise entre 250 N.m$^{-3}$.s et 3000N.m$^{-3}$.s, notamment entre 250 N.m$^{-3}$.s et 1500 N.m$^{-3}$.s.

La résistance au passage de l'air ou sa résistivité est mesurée par la méthode décrite dans la thèse "Mesures des paramètres caractérisant un milieu poreux. Etude expérimentale du comportement acoustique des mousses aux basses fréquences.", Michel HENRY, soutenue le 3 octobre 1997 à l'Université du Mans.

L'épaisseur ES de la région supérieure poreuse 16 est par exemple comprise entre 0,5 mm et 15 mm, et est notamment comprise entre 0,5 mm et 10 mm.

Cette épaisseur ES est inférieure à 50 % de l'épaisseur ET du corps 14. Avantageusement, cette épaisseur ES est comprise entre 10% et 40% de l'épaisseur ET du corps 14.

La masse surfacique de la région supérieure poreuse 16 est supérieure à 500g/m$^2$ et est comprise entre 500g/m$^2$ et 3500g/m$^2$, avantageusement entre 1000g/m$^2$ et 2000g/m$^2$.

La région supérieure poreuse 16 présente avantageusement une raideur en flexion B, ramenée à une largeur unitaire, supérieure à 0,01 N.m, notamment comprise entre 0,1 N.m et 1 N.m, avantageusement comprise entre 0,1 N.m et 0,5 N.m.

La raideur en flexion B est calculée, par l'équation :

$$B = E.h^3/12,$$

où h est l'épaisseur de la région supérieure poreuse 16, et E est son Module d'Young.

Le Module d'Young ou module élastique est mesuré par exemple par la méthode décrite dans l'article : C. Langlois, R. Panneton, and N. Atalla, "Polynomial relations for quasistatic mechanical characterization of isotropic poroelastic materials,"J. Acoust. Soc. Am. 110, 3032-3040 (2001).

La région inférieure poreuse 20 présente une porosité adaptée pour présenter une résistivité au passage de l'air avantageusement comprise entre 15000 $N.m^{-4}.s$ et 80000 $N.m^{-4}.s$ notamment comprise entre 20000 $N.m^{-4}.s$ et 50000 $N.m^{-4}.s$ .

L'épaisseur EI de la région inférieure poreuse 20, prise perpendiculairement à la surface 12, est avantageusement comprise entre 2 mm et 35 mm, par exemple entre 5 mm et 25 mm.

Pour présenter des propriétés de ressort, la région inférieure poreuse 20 présente avantageusement un module élastique supérieur à 5000 Pa. Ce module est avantageusement compris entre 20000 Pa et 100000 Pa, notamment entre 30000 Pa et 40000 Pa.

Le module élastique est mesuré comme indiqué plus haut.

Un procédé de fabrication de la pièce d'insonorisation 10 selon l'invention est mis en oeuvre dans une installation 30 illustrée schématiquement sur la figure 2.

L'installation 30 comporte une unité 32 de fourniture du corps 14, un convoyeur 34 de déplacement du corps 14, au moins une unité 36 de dépôt d'éléments granulaires 18 et éventuellement d'éléments liants 22 sur le corps 14, et une unité 38 d'incorporation des éléments granulaires 18 dans le corps 14.

L'installation 30 comporte en outre avantageusement une unité 40 d'activation des éléments liants 22 et une unité 42 de découpe.

L'unité 32 de fourniture du corps 14 est propre à former le corps 14 à partir d'une nappe de fibres ou à fournir un corps 14 préformé sous forme d'une bande.

Le convoyeur 34 est propre à faire défiler le corps 14 depuis l'unité de fourniture 32 pour atteindre l'unité de découpe 42 le long d'un axe longitudinal A-A', pour qu'il passe en regard de l'unité de dépôt 36, de l'unité d'incorporation 38, de l'unité d'activation 40.

L'unité de dépôt 36 comporte un réservoir 44 d'éléments granulaires 18 et au moins un distributeur 46 propre à déposer les éléments granulaires 18 sous forme d'une couche continue sur la surface supérieure 26 du corps 14. Le distributeur 46 comporte par exemple un rouleau 48 et un guide 50 débouchant au-dessus de la surface supérieure 26.

En variante les éléments granulaires 18 sont disposés suivants des zones spécifiques avec des poids variables de façon à adapter localement la résistance au passage de l'air et la masse surfacique de la pièce 10.

L'unité d'incorporation 38 comporte par exemple une source 52 de génération d'un champ électromagnétique, en particulier d'un champ électrique variable s'appliquant sur les éléments granulaires 18 pour les faire pénétrer dans le corps 14 sur une épaisseur donnée.

Avantageusement, l'unité d'incorporation 38 comporte en outre une source vibratoire (non représentée) pour faciliter l'incorporation des éléments granulaires 18 dans le corps 14.

L'unité d'incorporation 38 est par exemple formée par une machine de type « FIBROLINE© ».

L'unité d'activation 40 comporte ici une source de chaleur, propre à chauffer les éléments liants 22 au-dessus de leur température de fusion pour les faire fondre au moins partiellement. La source de chaleur comporte par exemple une lampe infrarouge.

L'unité de découpe 42 est propre à découper le corps 14 comprenant les éléments granulaires 18 incorporés dans leur région supérieure 16 aux dimensions de la pièce 10.

Un procédé de fabrication de la pièce 10 va maintenant être décrit.

Initialement, le corps 14 est fourni sous forme d'une bande en étant fabriqué à partir d'une nappe de fibres directement dans l'unité de fourniture 32, ou dans une autre unité.

Le corps 14 est amené sur le convoyeur 34, sous forme d'une bande continue et est déplacée successivement en regard de l'unité de dépôt 36, de l'unité d'incorporation 38, et de l'unité d'activation 40.

L'unité de dépôt 36 dépose continûment des éléments granulaires 18 provenant du réservoir 44 sur la surface supérieure 26 du corps 14 à l'aide du distributeur 46.

Avantageusement, l'unité de dépôt 36 dépose conjointement ou séparément des éléments liant 22 sur la surface supérieure 26 du corps 14.

Puis, les éléments granulaires 18 déposés sur le corps 14 passent dans l'unité d'incorporation 38. Sous l'effet du champ électromagnétique engendré par la source 52, ils pénètrent dans le corps sur une épaisseur ES correspondant à l'épaisseur de la région supérieure 16. De même, les éléments liants 22 sont incorporés dans la région supérieure 16

Ensuite, le corps 14 muni des éléments granulaires 18 et des éléments liants 22 passe dans l'unité d'activation 40. Le chauffage des éléments liants 22 provoque leur fusion au moins partielle, sans fusion des éléments granulaires 18.

Les éléments granulaires 18 se lient aux fibres 15, et occupent partiellement les interstices entre les fibres 15. La tortuosité locale augmente donc dans la région supérieure poreuse 16, et la porosité diminue tout en restant non nulle.

La résistance au passage de l'air de la région supérieure poreuse 16 augmente donc d'une valeur supérieure d'au moins 100 $N.m^{-3}.s$ à la valeur de la résistance au passage de l'air de la région inférieure 20.

Puis, la pièce 10 est découpée aux dimensions souhaitées dans l'unité de découpe 42.

Le procédé selon l'invention permet donc l'obtention d'une pièce d'insonorisation 10 bi-perméable, avec une résistance au passage de l'air choisie pour la région supérieure poreuse 16, en une étape, sans avoir à réaliser un assemblage de couches. Ce procédé est donc nettement moins onéreux qu'un procédé de l'état de la technique comprenant la fabrication successive de couches de la pièce, puis leur assemblage.

Par ailleurs, le procédé selon l'invention permet de choisir l'épaisseur de la région supérieure poreuse 16 par le réglage de l'unité d'incorporation 38 et de la vitesse de défilement sur le convoyeur 34.

La granulométrie des éléments granulaires 18 introduits dans le corps 14 est également choisie pour obtenir les propriétés souhaitées de résistance au passage de l'air, en combinaison avec l'épaisseur de la région supérieure poreuse 16.

Le choix d'éléments granulaires 18 de densité faible, notamment comprise entre 0,8 et 2 permet de ne pas augmenter significativement la masse de la pièce 10, tout en obtenant un effet représentatif sur la résistance au passage de l'air.

Les propriétés acoustiques de la pièce d'insonorisation 10 sont donc particulièrement bénéfiques, notamment en termes d'absorption, et ce à moindre coût.

Dans l'exemple représenté sur la figure 1, la pièce 10 est constituée du corps 14 comprenant la région supérieure poreuse 16 et la région inférieure poreuse 20. En variante (non représentée), la pièce d'insonorisation 10 comporte en outre une couche décorative, comme par exemple un décor ou une moquette, disposée au-dessus de la surface supérieure 26.

Dans une autre variante, des éléments granulaires 18 de natures ou de tailles moyennes distinctes sont introduites successivement ou simultanément dans la région supérieure 16 du corps 14.

Dans une autre variante, illustrée partiellement sur la figure 3, la pièce d'insonorisation 10 est introduite dans un moule 70 à la sortie de l'unité de découpe 42.

Dans ce cas, l'unité d'activation 40 n'est pas nécessairement située en amont de l'unité de découpe 42, mais peut-être positionnée pour chauffer la pièce 10 avant son introduction dans le moule 70, ou/et peut être incorporée au moule 70.

Avantageusement, la région supérieure poreuse 16 et la région inférieure 20 sont comprimées dans le moule 70 pour présenter chacune une épaisseur inférieure à celle occupée à la sortie de l'unité de découpe 42.

À la sortie du moule 70, la région supérieure poreuse 16 conserve l'épaisseur qu'elle occupe dans le moule 70, grâce à la présence des éléments liants 22, alors que l'épaisseur de la région inférieure 20 augmente pour être supérieure à l'épaisseur qu'elle occupe dans le moule 70 et avantageusement sensiblement égale à l'épaisseur qu'elle possède à la sortie de l'unité de découpe 42.

## Revendications

**1.** Pièce (10) d'insonorisation de véhicule automobile comportant un corps (14) comprenant une pluralité de fibres (15) entrelacées et/ou liées, **caractérisée en ce que** le corps (14) comporte dans son épaisseur :

- une région supérieure poreuse (16) comportant des éléments granulaires (18) dispersés entre les fibres (15) ;
- une région inférieure poreuse (20) dépourvue d'éléments granulaires (18) dispersés, ou comportant une concentration d'éléments granulaires (18) dispersés inférieure à la concentration en éléments granulaires (18) dispersés de la région supérieure poreuse (16) ;

la région supérieure poreuse (16) présentant une résistance au passage de l'air supérieure d'au moins 100 $N.m^{-3}.s$ à la résistance au passage de l'air de la région inférieure poreuse (20).

**2.** Pièce (10) selon la revendication 1, dans laquelle la résistance au passage de l'air de la région supérieure poreuse (16) est supérieure à 250 $N.m^{-3}.s$ et est notamment comprise entre 250 $N.m^{-3}.s$ et 1500 $N.m^{-3}.s$.

**3.** Pièce (10) selon l'une des revendications précédentes, comprenant des éléments liants (22), les éléments granulaires (18) étant liés aux fibres (15) par l'intermédiaire des éléments liants (22).

**4.** Pièce (10) selon l'une quelconque des revendications précédentes, dans laquelle la dimension moyenne des éléments granulaires (18) est inférieure à 1 mm et est notamment comprise entre 5 $\mu$m et 500 $\mu$m.

**5.** Pièce (10) selon l'une quelconque des revendications précédentes, dans laquelle la densité du matériau constituant les éléments granulaires (18) est inférieure à 3, et est notamment comprise entre 0,8 et 2.

**6.** Pièce (10) selon l'une quelconque des revendications précédentes, dans laquelle l'épaisseur de la région supérieure poreuse (16) est inférieure à 50% de l'épaisseur du corps (14).

**7.** Pièce (10) selon l'une quelconque des revendications précédentes, dans laquelle le corps (14) est un feutre ou un textile.

**8.** Pièce (10) selon l'une quelconque des revendications précédentes, dans laquelle le corps (14) est d'un seul tenant.

**9.** Pièce (10) selon l'une quelconque des revendications précédentes, dans laquelle les éléments granulaires (18) sont formés de charges de baryte, de craie ou d'argiles.

10. Procédé de fabrication d'une pièce (10) d'insonorisation de véhicule automobile comportant les étapes suivantes :

- fourniture d'un corps (14) comportant une pluralité de fibres (15) entrelacées et/ou liées, **caractérisé par** les étapes suivantes :
- incorporation d'éléments granulaires (18) entre les fibres (15) d'une région supérieure poreuse (16) du corps (14) ;
- maintien d'une région inférieure poreuse (20) dépourvue d'éléments granulaires (18) dispersés, ou d'une région inférieure poreuse (20) présentant une concentration d'éléments granulaires (18) dispersés inférieure à la concentration en éléments granulaires (18) dispersés de la région supérieure poreuse (16) ;

la région supérieure poreuse (16) présentant une résistance au passage de l'air supérieure d'au moins 100 N.m$^{-3}$.s à la résistance au passage de l'air de la région inférieure poreuse (20).

11. Procédé selon la revendication 10, dans lequel la résistance au passage de l'air de la région supérieure poreuse (16) est supérieure à 250 N.m$^{-3}$.s. et est notamment comprise entre 250 N.m$^{-3}$.s. et 1000 N.m$^{-3}$.s.

12. Procédé selon la revendication 10 ou 11, comportant une étape d'incorporation, entre les fibres (15) de la région supérieure poreuse (16) du corps (14), d'éléments liants (22), et l'activation des éléments liants (22), avantageusement par chauffage pour lier les éléments granulaires (18) aux fibres (15).

13. Procédé selon l'une quelconque des revendications 10 à 12, comportant le contrôle de l'épaisseur de pénétration des éléments granulaires (18) lors de l'étape d'incorporation pour que l'épaisseur de la région supérieure poreuse (16) soit inférieure à 50% de l'épaisseur du corps (14) fibreux.

14. Procédé selon l'une quelconque des revendications 10 à 13, dans lequel l'étape d'incorporation des éléments granulaires (18) comporte l'incorporation des éléments granulaires (18) dans le corps (14) par application d'un champ électrique et/ou par application d'un mouvement vibratoire au corps (14).

## FIG.1

## FIG.2

## FIG.3

Europäisches
Patentamt

European
Patent Office

Office européen
des brevets

# RAPPORT DE RECHERCHE EUROPEENNE

Numéro de la demande

EP 19 15 8593

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | JP H11 44014 A (MATSUSHITA ELECTRIC WORKS LTD) 16 février 1999 (1999-02-16) * abrégé; figures * | 1,10 | INV. B29C70/64 B60R13/08 |
| A,D | US 2006/113146 A1 (KHAN HAMEED S [US] ET AL) 1 juin 2006 (2006-06-01) * alinéa [0014] - alinéa [0032]; figures * | 10,11 | |
| A | DE 10 2006 005369 B3 (CARCOUSTICS TECH CT GMBH [DE]) 19 juillet 2007 (2007-07-19) * alinéa [0021] - alinéa [0045]; figures * | 1,10 | |
| A | JP 2004 131894 A (TAKEHIRO KK; KONDO MITSUTO) 30 avril 2004 (2004-04-30) * abrégé; figures * | 1,10 | |
| A | FR 2 889 617 A1 (MECAPLAST SA [MC]) 9 février 2007 (2007-02-09) * page 7, ligne 10 - page 12, ligne 35; figures * | 1,10 | |
| A | WO 2018/002457 A1 (CERA APS [FR]) 4 janvier 2018 (2018-01-04) * page 6, ligne 28 - page 17, ligne 23; figures * | 1,10 | DOMAINES TECHNIQUES RECHERCHES (IPC) B29C B60R G10K |
| A | EP 1 657 375 A1 (KRONOTEC AG [CH]) 17 mai 2006 (2006-05-17) * alinéa [0004] - alinéa [0029]; figures * | 1,10 | |
| A | EP 2 053 593 A2 (CERA [FR]) 29 avril 2009 (2009-04-29) * alinéa [0009] - alinéa [0029]; figures * | 1,10 | |
| A | DE 201 00 632 U1 (FRITZ EGGER GMBH [AT]) 28 février 2002 (2002-02-28) * page 12, ligne 5 - page 16, ligne 17; figures * | 1,10 | |

Le présent rapport a été établi pour toutes les revendications

| Lieu de la recherche | Date d'achèvement de la recherche | Examinateur |
|---|---|---|
| Berlin | 15 mars 2019 | David, Pascal |

**EP 3 530 441 A1**

**ANNEXE AU RAPPORT DE RECHERCHE EUROPEENNE
RELATIF A LA DEMANDE DE BREVET EUROPEEN NO.**

EP 19 15 8593

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-03-2019

| Document brevet cité au rapport de recherche | | | Date de publication | Membre(s) de la famille de brevet(s) | | | Date de publication |
|---|---|---|---|---|---|---|---|
| JP | H1144014 | A | 16-02-1999 | JP | 3482116 | B2 | 22-12-2003 |
| | | | | JP | H1144014 | A | 16-02-1999 |
| US | 2006113146 | A1 | 01-06-2006 | AU | 2003288239 | A1 | 30-06-2004 |
| | | | | BR | 0317105 | A | 25-10-2005 |
| | | | | CA | 2505891 | A1 | 24-06-2004 |
| | | | | CN | 1720569 | A | 11-01-2006 |
| | | | | EP | 1428656 | A1 | 16-06-2004 |
| | | | | EP | 1570461 | A1 | 07-09-2005 |
| | | | | ES | 2418805 | T3 | 16-08-2013 |
| | | | | JP | 2006511830 | A | 06-04-2006 |
| | | | | JP | 2009034998 | A | 19-02-2009 |
| | | | | KR | 20050085431 | A | 29-08-2005 |
| | | | | US | 2006113146 | A1 | 01-06-2006 |
| | | | | WO | 2004053833 | A1 | 24-06-2004 |
| DE | 102006005369 | B3 | 19-07-2007 | DE | 102006005369 | B3 | 19-07-2007 |
| | | | | EP | 1979145 | A1 | 15-10-2008 |
| | | | | WO | 2007090479 | A1 | 16-08-2007 |
| JP | 2004131894 | A | 30-04-2004 | JP | 4508524 | B2 | 21-07-2010 |
| | | | | JP | 2004131894 | A | 30-04-2004 |
| FR | 2889617 | A1 | 09-02-2007 | CN | 101238507 | A | 06-08-2008 |
| | | | | EP | 1911018 | A1 | 16-04-2008 |
| | | | | FR | 2889617 | A1 | 09-02-2007 |
| | | | | WO | 2007015014 | A1 | 08-02-2007 |
| WO | 2018002457 | A1 | 04-01-2018 | AUCUN | | | |
| EP | 1657375 | A1 | 17-05-2006 | AT | 507354 | T | 15-05-2011 |
| | | | | DE | 102004056131 | A1 | 22-06-2006 |
| | | | | EP | 1657375 | A1 | 17-05-2006 |
| | | | | ES | 2365517 | T3 | 06-10-2011 |
| | | | | PT | 1657375 | E | 16-06-2011 |
| | | | | US | 2006234019 | A1 | 19-10-2006 |
| EP | 2053593 | A2 | 29-04-2009 | EP | 2053593 | A2 | 29-04-2009 |
| | | | | FR | 2922676 | A1 | 24-04-2009 |
| DE | 20100632 | U1 | 28-02-2002 | AT | 277247 | T | 15-10-2004 |
| | | | | DE | 10200559 | A1 | 14-08-2002 |
| | | | | DE | 20100632 | U1 | 28-02-2002 |
| | | | | EP | 1349996 | A1 | 08-10-2003 |
| | | | | WO | 02055811 | A1 | 18-07-2002 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060113146 A

**Littérature non-brevet citée dans la description**

- **C. LANGLOIS ; R. PANNETON ; N. ATALLA.** Polynomial relations for quasistatic mechanical characterization of isotropic poroelastic materials. *J. Acoust. Soc. Am.,* 2001, vol. 110, 3032-3040